(19) Europäisches Patentamt
European Patent Office
Office européen des brevets

(11) EP 2 666 836 A2

(12) **EUROPEAN PATENT APPLICATION**

(43) Date of publication:
**27.11.2013 Bulletin 2013/48**

(51) Int Cl.:
***C09J 7/02*** *(2006.01)* ***C08K 5/51*** *(2006.01)*

(21) Application number: **13169186.7**

(22) Date of filing: **24.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.05.2012 US 201261651670 P**

(71) Applicant: **Nitto Denko Corporation**
**Osaka 567-8680 (JP)**

(72) Inventors:
- **Muta, Shigeki**
  **Ibaraki-shi, Osaka 567-8680 (JP)**
- **Suzuki, Masatoshi**
  **Ibaraki-shi, Osaka 567-8680 (JP)**
- **Weintraub, Nathaniel**
  **Lakewood, NJ New Jersey 08701 (US)**

(74) Representative: **Grünecker, Kinkeldey, Stockmair & Schwanhäusser**
**Leopoldstrasse 4**
**80802 München (DE)**

(54) **Moisture-proof material**

(57) The present invention relates to a moisture-proof material containing a substrate and an adhesive layer formed on at least one surface of the substrate, wherein at least one of the substrate and the adhesive layer comprises a polyphosphate flame retardant and a phosphate triester flame retardant, simultaneously or alternatively.

FIG. 1

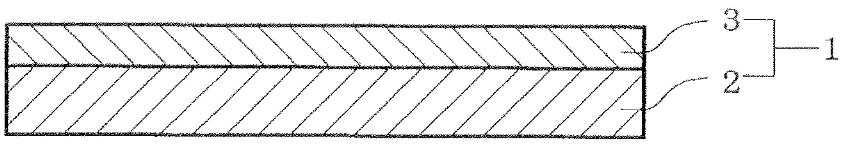


EP 2 666 836 A2

## Description

### TECHNICAL FIELD OF THE INVENTION

The present invention relates to a moisture-proof material to be directly adhered to various members to be protected from moisture, particularly, a moisture-proof material preferable for direct adhesion to a floor panel for transportation vehicles, such as airplane, boat, ship and the like, building structures and the like, to prevent exposure of the floor panel to moisture and humidity.

### BACKGROUND OF THE INVENTION

For example, carpets made of various materials and forms are generally laid on the floor of transportation vehicles, such as airplane, boat, ship and the like, building structures and the like for the purpose of ensuring walkability, good appearance, heat retaining property and the like. For example, since electrical components, electric wiring and the like are set under the floor panel of airplanes, it is necessary to shut off the moisture and humidity from the floor panel (that is, moisture-proof) so that the moisture will not penetrate under the floor panel. However, since the floor panel is fixed onto the body frame by bolting, it is difficult to completely prevent moisture permeation from the clearance between a bolt and a screw hole formed for bolting a floor panel, even when the bolt is screwed into the screw hole. For this reason, a highly moisture-proof adhesive sheet is adhered to a floor panel before laying a carpet, and then the carpet is laid on the floor panel. In addition, since the planar shape of the floor in airplanes, boats, ships, houses and the like is not necessarily regular, covering the whole floor surface with one sheet of carpet is difficult, and generally, plural sheets of carpets are connected and laid. Thus, even when the carpet is made of a highly moisture-proof material, moisture may sometimes reach the floor from the joint of the carpets. Therefore, a highly moisture-proof adhesive tape or adhesive sheet is attached in advance to at least the part of the floor panel that comes under the joint of the carpets, after which the carpets are laid. As such highly moisture-proof adhesive tape, for example, an adhesive tape using polyether polyurethane (US-A-2004/0070156) is known.

The members for airplane are required to show high flame retardance, and adhesive tapes and adhesive sheets aiming at moisture proof of floor panels such as those mentioned above also need to satisfy the standard of the flame resistance. Therefore, addition of a halogen flame retardant, which achieves high flame resistance, is considered. Although halogen flame retardants show high flame resistance, they produce a large amount of toxic halogen gas at the time of combustion, which in turn may cause corrosion of instruments and adverse influences on the human body and the environment.

### BREIEF SUMMARY OF THE INVENTION

The present inventors tried to confer flame resistance to an adhesive tape and an adhesive sheet by using a non-halogen flame retardant that does not develop a toxic halogen gas at the time of combustion. However, since floor panel may have a volting part and an uneven surface, application of an adhesive tape or an adhesive sheet to accurately cover a desired area of a floor panel with good adhesiveness requires the adhesive tape or adhesive sheet to have transparency at least of a level permitting visible recognition of the floor panel. On the contrary, to confer sufficiently high flame resistance to an adhesive tape or adhesive sheet by adding a non-halogen flame retardant, a comparatively large amount of the flame retardant needs to be added, which problematically decreases the transparency and adhesive force of the adhesive tape and the adhesive sheet.

The present invention has been made in consideration of the above-mentioned situation, and the problem to be solved thereby is provision of a moisture-proof material having sufficiently high flame resistance and superior adhesive property, which does not generate a toxic halogen gas at the time of burning.

Another problem is provision of a moisture-proof material having sufficiently high flame resistance, superior adhesive property and comparatively high transparency, which does not generate a toxic halogen gas at the time of burning.

The present inventors have found that the above-mentioned problems can be effectively solved by a combined use of a polyphosphate flame retardant and a phosphate triester flame retardant. Further studies conducted based on said finding have resulted in the completion of the present invention.

Accordingly, the present invention has the following characteristics.

(1) A moisture-proof material comprising a substrate and an adhesive layer formed on at least one surface of the substrate, wherein at least one of the substrate and the adhesive layer comprises a polyphosphate flame retardant and a phosphate triester flame retardant, simultaneously or alternatively.

(2) The moisture-proof material of the above-mentioned (1), wherein the polyphosphate flame retardant is a salt of

polyphosphoric acid and a nitrogen-containing heterocyclic compound.

(3) The moisture-proof material of the above-mentioned (1), wherein the polyphosphate flame retardant is a salt of polyphosphoric acid and melamine.

(4) The moisture-proof material of the above-mentioned (1), wherein the phosphate triester flame retardant is aromatic phosphate triester.

(5) The moisture-proof material of the above-mentioned (1), wherein the content of the polyphosphate flame retardant is 5 - 50 wt% of the whole moisture-proof material and the content of the phosphate triester flame retardant is 5 - 30 wt% of the whole moisture-proof material.

(6) The moisture-proof material of the above-mentioned (1), wherein the polyphosphate flame retardant and phosphate triester flame retardant are contained in at least an adhesive layer.

(7) The moisture-proof material of the above-mentioned (6), wherein the content of the polyphosphate flame retardant in the adhesive layer is 5 - 40 wt% of the whole adhesive layer and the content of the phosphate triester flame retardant in the adhesive layer its 5 - 20 wt% of the whole adhesive layer.

(8) The moisture-proof material of the above-mentioned (7), comprising a substrate which does not contain a polyphosphate flame retardant and a phosphate triester flame retardant.

(9) The moisture-proof material of the above-mentioned (1), which shows a burning time of not more than 15 seconds and an extent of burning of not more than 8 inches in the following burning test:

[burning test]

A test sample with a flat surface size of 3 inch × 12 inch and comprised of a moisture-proof material and a floor panel adhered to each other is set such that the axis in the length direction thereof is parallel to the vertical direction, a yellow chip-free blue flame (length 38 mm) of a methane gas is burnt in the vertical direction in contact with the sample for 12 seconds from a bunsen or Tirrill burner having a diameter (inner diameter) of 10 mm, which is set beneath the test sample in the vertical direction, such that the center of the lower end of the aforementioned test sample is at the height of 1/2 (19 mm) of the length of the flame, and the time of burning after removing the flame is measured.

(10) The moisture-proof material of the above-mentioned (1), wherein the moisture transmissivity is not more than 9.0%.

(11) The moisture-proof material of the above-mentioned (1), which has a moisture absorption rate of not more than 1.0%.

(12) The moisture-proof material of the above-mentioned (1), wherein the tensile strength is not more than 15000 psi.

(13) The moisture-proof material of the above-mentioned (1), wherein the rupture elongation is not more than 1500%.

According to the present invention, a moisture-proof material having sufficiently high flame resistance and superior adhesive property, which does not generate a toxic halogen gas at the time of burning, can be realized.

According to the present invention, moreover, a moisture-proof material having sufficiently high flame resistance, superior adhesive property and comparatively high transparency, which does not generate a toxic halogen gas at the time of burning, can be realized.

BRIEF DESCRIPTION OF THE DRAWINGS

Fig. 1 is a schematic sectional view of one embodiment of the moisture-proof material of the present invention.

Fig. 2 is a schematic view of one embodiment wherein a moisture-proof material is interposed between a floor panel and a carpet.

Fig. 3 is a schematic view of another embodiment wherein a moisture-proof material is interposed between a floor panel and a carpet.

Fig. 4 is a schematic view of an evaluation test of the linearity on adhesion of a moisture-proof material.

Fig. 5 is a side view explaining the burning test, wherein Fig. 5(a) is a side view of the test sample and Fig. 5(b) is a front view of the test sample.

In the drawings, 1 is a moisture-proof material, 2 is a substrate, 3 is an adhesive layer, 10 is a floor panel, 11 is a carpet, 12 is a double-faced adhesive tape or sheet, 50 is an adherend, 51 is a spring balance, and T is a tape.

DETAILED DESCRIPTION OF THE INVENTION

The present invention is explained in the following by referring to preferable embodiments thereof. As shown in Fig. 1, a moisture-proof material 1 of the present invention comprises a substrate 2 and an adhesive layer 3 formed on at least one surface of the substrate 2. The moisture-proof material 1 of the present invention contains a polyphosphate flame retardant and a phosphate triester flame retardant.

The polyphosphate flame retardant and the phosphate triester flame retardant are contained, respectively, in at least one of the substrate 2 and adhesive layer 3.

That is, the moisture-proof material 1 of the present invention encompasses the following first - seventh embodiments.
The first embodiment: substrate 2 contains a polyphosphate flame retardant and a phosphate triester flame retardant, and adhesive layer 3 does not contain a polyphosphate flame retardant and a phosphate triester flame retardant.

The second embodiment: adhesive layer 3 contains a polyphosphate flame retardant and a phosphate triester flame retardant, and substrate 2 does not contain a polyphosphate flame retardant and a phosphate triester flame retardant.

The third embodiment: substrate 2 contains a polyphosphate flame retardant (without containing a phosphate triester flame retardant), and adhesive layer 3 contains a phosphate triester flame retardant (without containing a polyphosphate flame retardant).

The fourth embodiment: substrate 2 contains a phosphate triester flame retardant (without containing a polyphosphate flame retardant), and adhesive layer 3 contains a polyphosphate flame retardant (without containing a phosphate triester flame retardant).

The fifth embodiment: substrate 2 contains a polyphosphate flame retardant and a phosphate triester flame retardant, and adhesive layer 3 further contains either a polyphosphate flame retardant or a phosphate triester flame retardant.

The sixth embodiment: adhesive layer 3 contains a polyphosphate flame retardant and a phosphate triester flame retardant, and substrate 2 further contains either a polyphosphate flame retardant or a phosphate triester flame retardant.

The seventh embodiment: substrate 2 contains a polyphosphate flame retardant and a phosphate triester flame retardant, and adhesive layer 3 also contains a polyphosphate flame retardant and a phosphate triester flame retardant.

To sufficiently increase the flame resistance of a moisture-proof material, the moisture-proof material preferably has at least an embodiment containing a polyphosphate flame retardant and a phosphate triester flame retardant in the substrate, or an embodiment containing a polyphosphate flame retardant and a phosphate triester flame retardant in the adhesive layer.

In view of the dispersibility of the flame retardant (conferring uniform flame resistance to moisture-proof material), the moisture-proof material preferably has an embodiment containing a polyphosphate flame retardant and a phosphate triester flame retardant in the adhesive layer.

Generally, the moisture-proof material 1 of the present invention is directly adhered to a floor panel 10 when a carpet 11 is placed on a floor panel 10, whereby the material is interposed between the floor panel 10 and the carpet 11, as shown in Figs. 2 and 3. Fig. 2 shows an example wherein a moisture-proof material is a sheet to be laid under the entire carpet 11, and Fig. 3 shows an example wherein a moisture-proof material is applied under the joint of the carpet. As shown in Figs. 2 and 3, a double-faced adhesive tape or sheet 12 is generally adhered to the undersurface of the carpet 11, and the double-faced adhesive tape or sheet 12 is adhered to a substrate 2 of the moisture-proof material 1.

In the present specification, the "floor panel" means a panel forming a floor (that is, a basal plane horizontally comparting a space in transportation vehicles and building structures), which is made of, for example, various materials such as materials made from particular fiberglass reinforced plastic (GFRP), and carbon fiber reinforced plastic (CFRP) and the like. The "carpet" is a concept encompassing not only general textile floor covering but also various cover materials used to cover floor surfaces, such as vinyl chloride tile, olefin sheet, linoleum sheet, flooring material and the like.

[substrate]

In the moisture-proof material 1 of the present invention, the material of the substrate 2 is not particularly limited. Examples thereof include films (single layer film) comprising one or more kinds of plastics selected from the group consisting of polyester (e.g., poly(ethylene terephthalate) (PET) etc.), nylon, polyolefin (polyvinyl chloride, polyvinylidene chloride, polyethylene, polypropylene, reactor TPO, ethylene-vinyl acetate copolymer etc.), polyurethane, fluororesin (polytetrafluoroethylene etc.) and ionomer resin, a metal foil, a laminate film of two or more selected therefrom and the like. These films may be used in the state of a solid film (non-porous film) or a perforated film produced by a mechanical perforation treatment. In addition, fiber sheets (single layer sheet, laminated sheet having 2 or more layers) such as

knitted fabric, woven fabric, non-woven fabric and the like using one or more kinds of fibers selected from synthetic polymer fibers such as polyester (e.g., poly(ethylene terephthalate) (PET) etc.) and the like, natural fibers (cotton, hemp etc.), metal fibers and glass fibers, and a laminate sheet wherein one or more kinds of such fiber sheets are laminated on the aforementioned plastic film can also be used as the substrate 1.

While the plastic film, fiber sheet and the like are produced by a conventional method, when a flame retardant is added to the substrate 1, a flame retardant may be added to the starting materials of the plastic film and the fiber sheet, or a flame retardant is added in a semi-product stage in the production step or the like, whereby the substrate 1 can contain a flame retardant.

When the substrate 1 is a plastic film, a non-porous plastic film is preferable from the aspect of resistance to moisture permeability (moisture barrier property). In addition, a plastic film having high transparency is preferable from the aspect of adhesion workability of a moisture-proof material.

Moreover, since the planar shape of the floor in airplanes, boats and ships, house and the like is not necessarily regular, covering the whole floor surface with one sheet of carpet is often unavailable. In such case, plural sheets of carpets are connected and laid. Therefore, moisture-proof materials are required to show superior linearity on adhesion (i.e., property to perform linear adhesion in the length direction (direction orthogonal to width direction) while maintaining predefined width). From the aspect of the linearity on adhesion, substrate 2 preferably shows high tensile strength and resists elongation. As such substrate 2, a polyurethane film is particularly preferable.

While the polyurethane is not particularly limited, polyether polyurethane wherein the polyol component consists of polyether polyol, polyester polyurethane wherein the polyol component consists of polyester polyol, polycarbonate polyurethane wherein the polyol component consists of polycarbonate polyol and the like can be mentioned. of these, polyester polyurethane is preferable from the aspects of strength, heat resistance and anchor property with an adhesive layer.

Examples of the polyol component of polyester polyurethane include polyester polyol comprised of a polycondensate of alcohols such as ethylene glycol, diethylene glycol, propylene glycol, butylene glycol, hexamethylene glycol, 1,4-butanediol, 1,6-hexanediol, 1,9-nonanediol, 2-methyl-1,3-propanediol, neopentyl glycol, 3-methyl-1,5-pentanediol and the like, and a dibasic acid such as adipic acid, azelaic acid, sebacic acid and the like, polycaprolactone polyol and the like. One or more kinds of polyol component can be used.

From the aspect of moisture permeability resistance (moisture barrier properties) of the moisture-proof material, polyester polyol comprised of polycondensate of one or more kinds of alcohols selected from the group consisting of 1,9-nonanediol, 2-methyl-1,3-propanediol, neopentyl glycol and 3-methyl-1,5-pentanediol, and one or more kinds of dibasic acid selected from the group consisting of adipic acid, azelaic acid and sebacic acid is(are) preferable.

As the polyisocyanate component of polyester polyurethane, a known aliphatic, alicyclic or aromatic organic isocyanate compound having two or more isocyanate groups in one molecule can be used.

Examples of the aliphatic isocyanate compound include aliphatic diisocyanates such as butane-1,4-diisocyanate, hexamethylene diisocyanate, isopropylene diisocyanate, methylene diisocyanate, 2,2,4-trimethylhexamethylene diisocyanate, lysine diisocyanate, dimer diisocyanate wherein carboxyl group of dimer acid is inverted to an isocyanate group and the like. In addition, examples of the alicyclic isocyanate compound include alicyclic diisocyanates such as cyclohexane-1,4-diisocyanate, isophorone diisocyanate, norbornane diisocyanate, dicyclohexylmethane-4,4'-diisocyanate, 1,3-bis(isocyanatomethyl)cyclohexane, methylcyclohexane diisocyanate and the like. Furthermore, examples of the aromatic isocyanate compound include aromatic diisocyanates such as 1,5-naphthylene diisocyanate, 4,4'-diphenylmethane diisocyanate, 4,4'-diphenyldimethylmethane diisocyanate, 4,4'-dibenzyl diisocyanate, dialkyldiphenylmethane diisocyanate, tetraalkyldiphenylmethane diisocyanate, 1,3-phenylene diisocyanate, 1,4-phenylene diisocyanate, tolylene diisocyanate, xylylene diisocyanate, m-tetramethylxylylene diisocyanate and the like. As the polyisocyanate component, a trifunctional or more polyisocyanate compound such as adduct, isocyanurate, biuret and the like can also be used. One or more kinds of polyisocyanate component can be used.

The polyisocyanate component is preferably an aliphatic and/or alicyclic isocyanate compound (s), from the aspect of yellowing resistance.

One or more kinds of polyurethane can be used. While the average molecular weight of polyurethane is not limited, the number average molecular weight (Mn) is generally 5,000 - 500,000, preferably 10,000 - 300,000.

Examples of the polyether polyurethane film substrate include MT2001 manufactured by American Polyfilm, Inc. (thickness 7 mil) and the like. Examples of the polyester polyurethane film substrate include VLM4001 (thickness 4 mil), VLM3301 (thickness 7 mil) and VLM 3301 (thickness 10 mil), each manufactured by American Polyfilm, Inc., and the like.

In the moisture-proof material of the present invention, the thickness of the substrate 2 is not particularly limited. However, from the aspects of balance between low weight characteristics of the moisture-proof material and linearity on adhesion of the moisture-proof material, the moisture-proof property and the like, the thickness is preferably 7 - 16 mil, more preferably 12 - 15 mil, particularly preferably 13 - 15 mil.

[adhesive layer]

The adhesive to be used for an adhesive layer 3 of the moisture-proof material 1 of the present invention is not particularly limited and, for example, a polyurethane adhesive, an acrylic adhesive, a rubber adhesive, a silicone adhesive and the like can be used. Of these, a polyurethane adhesive is preferable from the aspects of flame retardance, removability, long-term durability and the like.

As polyurethane adhesive (A), an adhesive composition obtained by adding polyisocyanate curing agent (B) to polyurethane (A1) which is a reaction product of polyisocyanate (a1) and polyol (a2), or polyurethane (A2) obtained by reacting polyisocyanate (a1), polyol (a2), and dioxycarboxylic acid (a3) having two hydroxyl groups and one carboxy group in one molecule (that is, the "curing agent-containing polyurethane adhesive") can be used.

Polyisocyanate (a1) can be classified into aromatic polyisocyanate, aliphatic polyisocyanate, araliphatic polyisocyanate, and alicyclic polyisocyanate. Examples of the aromatic polyisocyanate include 1,3-phenylene diisocyanate, 4,4'-diphenyl diisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, 2,4,6-triisocyanatotoluene, 1,3,5-triisocyanatobenzene, dianisidine diisocyanate, 4,4'-diphenylether diisocyanate, 4,4',4"-triphenylmethane triisocyanate and the like. Examples of the aliphatic polyisocyanate include trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, dodecamethylene diisocyanate, 2,4,4-trimethylhexamethylene diisocyanate and the like. Examples of the araliphatic polyisocyanate include ω,ω'-diisocyanato-1,3-dimethylbenzene, ω,ω'-diisocyanato-1,4-dimethylbenzene, ω,ω'-diisocyanato-1,4-diethylbenzene, 1,4-tetramethylxylylene diisocyanate, 1,3-tetramethylxylylene diisocyanate and the like. Examples of the alicyclic polyisocyanate include 3-isocyanatomethyl-3,5,5-trimethylcyclohexyl isocyanate, 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexylisocyanato), 1,4-bis(isocyanatomethyl)cyclohexane and the like. In addition, polyisocyanate (a1) may be an adduct, an isocyanurate, a biuret and the like of the compounds exemplified above. Only one kind of polyisocyanate (a1) may be used, or two or more kinds thereof may be used in combination.

Examples of the polyol (a2) include polyester polyol (a2-1), polyether polyol (a2-2) and the like.

Polyester polyol (a2-1) is obtained by reacting a polyvalent carboxylic acid component and a polyol component. Examples of such polyvalent carboxylic acid component include terephthalic acid, adipic acid, azelaic acid, sebacic acid, phthalic anhydride, isophthalic acid, trimellitic acid and the like.

Examples of the above-mentioned polyol component include ethylene glycol, propylene glycol, diethylene glycol, butylene glycol, 1,6-hexene glycol, 3-methyl-1,5-pentanediol, 3,3'-dimethylol heptane, polyoxyethylene glycol, polyoxypropylene glycol, 1,4-butanediol, neopentyl glycol, butylethylpentanediol, glycerol, trimethylolpropane, pentaerythritol, as well as polyester polyol wherein lactones are open ring polymerized, such as polycaprolactone, poly(β-methyl-γ-valerolactone), polyvalerolactone etc. and the like.

Polyether polyol (a2-2) can be obtained by polymerizing an oxirane compound by using a low molecular weight polyol as an initiator. Examples of the above-mentioned oxirane compound include ethylene oxide, propylene oxide, butylene oxide, tetrahydrofuran and the like. Examples of the above-mentioned low molecular weight polyol include propylene glycol, ethylene glycol, glycerol, trimethylolpropane and the like.

One or more kinds of polyol (a2) can be used in combination. In addition, polyol (a2) having a low molecular weight to a high molecular weight can be used. Preferably, the number average molecular weight (Mn) is 500 - 20,000, more preferably 500 - 10,000.

Examples of dioxycarboxylic acid (a3) having two hydroxyl groups and one carboxyl group in one molecule [hereinafter sometimes to be indicated as dioxycarboxylic acid (a3)] include aliphatic dioxycarboxylic acids such as dihydroxyfumaric acid, dihydroxymaleic acid, 2,2-bis(hydroxymethyl)ethane acid (alias, dimethylol acetic acid), 2,3-dihydroxypropane acid (alias, glyceric acid), 2,2-bis(hydroxymethyl)propanoic acid (alias, 2,2-dimethylol propionic acid), 3,3-bis(hydroxymethyl)propanoic acid (alias, 3,3-dimethylol propionic acid), 2,3-dihydroxy-2-methylpropane acid, 2,2-bis(hydroxymethyl)butanoic acid (alias, dimethylol butyric acid), 2,2-dihydroxybutane acid (alias, 2,2-dimethylol butane acid), 2,3-dihydroxybutane acid, 2,4-dihydroxybutane acid (alias, 3-deoxytetronic acid), 3,4-dihydroxybutane acid, 2,4-dihydroxy-3,3-dimethylbutane acid, 2,3-dihydroxy-2-methylbutane acid, 2,3-dihydroxy-2-ethylbutane acid, 2,3-dihydroxy-2-isopropylbutane acid, 2,3-dihydroxy-2-butylbutane acid, (R)-2,4-dihydroxy-3,3-dimethylbutane acid (alias, pantoic acid), 2,3-dihydroxybutanedioic acid (alias, tartaric acid), 2,2-bis(hydroxymethyl)pentane acid (alias, dimethylol valeric acid), 3,5-dihydroxy-3-methylpentane acid (alias, mevalonic acid), 2,2-bis(hydroxymethyl)hexane acid (alias, dimethylol caproic acid), 2,2-bis(hydroxymethyl)heptane acid (alias, dimethylol enanthic acid), 3,5-dihydroxyheptane acid, 2,2-bis(hydroxymethyl)octanoic acid (alias, dimethylol caprylic acid), 2,2-bis(hydroxymethyl)nonane acid (alias, dimethylol pelargonic acid), 2,2-bis(hydroxymethyl)decane acid (alias, dimethylol capric acid), 2,2-bis(hydroxymethyl)dodecane acid (alias, dimethylol lauric acid), 2,2-bis(hydroxymethyl)tetradecane acid (alias, dimethylol myristic acid), 2,2-bis(hydroxymethyl)pentadecane acid, 2,2-bis(hydroxymethyl)hexadecane acid (alias, dimethylol palmitic acid), 2,2-bis(hydroxymethyl)heptadecane acid (alias, dimethylol margaric acid), 2,2-bis(hydroxymethyl)octadecane acid (alias, dimethylol stearic acid), dimethylol oleic acid, dimethylol linoleic acid, dimethylol linolenic acid, dimethylol arachidonic acid, dimethylol docosahexaenoic acid, dimethylol eicosapentaenoic acid and the like; aromatic ring or heterocycle-containing dioxycarboxylic acids such as 2,3-dihydroxybenzoic acid (alias, o-pyrocatechuic acid), 2,4-dihydroxybenzoic acid (alias, β-resorcinol acid), 2,5-dihydroxybenzoic acid (alias, gentisic acid), 2,6-dihydroxybenzoic acid (alias, γ-resorcinol acid), 3,4-dihydroxybenzoic acid (alias, protocatechuic acid), 3,5-dihydroxybenzoic acid (alias, α-resorcin acid), 2,6-dihydroxy-4-methylbenzoic acid, 2,4-dihydroxy-6-methylbenzoic acid (alias, o-orsellinic acid), 3,5-dihydroxy-4-methylbenzoic acid, 2,4-dihydroxy-3,6-dimethylbenzoic acid, 2,3-dihydroxy-4-methoxybenzoic acid, 3,4-dihydroxy-5-methoxybenzoic acid, 2,4-di(hydroxymethyl)benzoic acid, 3,4-di(hydroxymethyl)benzoic acid, 4-bromo-3,5-dihydroxybenzoic acid, 5-bromo-2,4-dihydroxybenzoic acid, 3-chloro-2,6-dihydroxybenzoic acid, 5-chloro-2,4-dihydroxybenzoic acid, hydroxy(4-hydroxy-3-methoxyphenyl)acetic acid (alias, vanilmandelic acid), D,L-3,4-dihydroxymandelic acid, 2,5-dihydroxyphenylacetic acid (alias, homogentisic acid), 3,4-dihydroxyphenylacetic acid (alias, homoprotocatechuic acid), 3,4-(methylenedioxy) phenylacetic acid, 3-(3,4-dihydroxyphenyl)propanoic acid (alias, hydrocaffeic acid), 3-(2,4-dihydroxyphenyl)acrylic acid (alias, umbellic acid), 3-(3,4-dihydroxyphenyl)acrylic acid (alias, caffeic acid), 4,4'-bis(p-hydroxyphenyl)pentane acid, 3-(3,4-methylenedioxyphenyl)propionic acid, 2,4-dihydroxycinnamic acid, 2,5-dihydroxycinnamic acid, cinnamyl-3,4-dihydroxy-α-cyanocinnamic acid, 2-bromo-4,5-methylenedioxycinnamic acid, 3,4-methylenedioxycinnamic acid, 4,5-methylenedioxy-2-nitrocinnamic acid, 2,6-dihydroxyisonicotinic acid, DL-3,4-dihydroxymandelic acid, 1,4-dihydroxy-2-naphthalenecarboxylic acid, 3,5-dihydroxy-2-naphthalenecarboxylic acid, 3,7-dihydroxy-2-naphthalenecarboxylic acid, 4,8-dihydroxyquinoline-2-carboxylic acid (alias, xanthurenic acid), 3-(3,4-dihydroxyphenyl)propionic acid, 2,4-dihydroxypyrimidine-5-carboxylic acid, 2,6-dihydroxypyridine-4-carboxylic acid (alias, citrazinic acid), 2,4-dihydroxythiazole-5-acetic acid, 2-(1-thienyl)ethyl-3,4-dihydroxybenzylidenecyanoacetic acid, dipropionic acid-6-estradiol, 2,5-dihydroxy-1,4-benzene diacetic acid, (2R,3R)-2,3-dihydroxy-3-(phenylcarbamoyl)propionic acid and the like, and the like. One or more kinds of dioxycarboxylic acids (a3) can be used.

Since dioxycarboxylic acid (a3) has two hydroxyl groups, it is subjected to polyaddition with polyisocyanate (a1) (urethane reaction) as a hydroxyl group component to produce polyurethane (A2), similar to the aforementioned polyol (a2). In addition, a carboxyl group derived from a dioxycarboxylic acid (a3) becomes the carboxyl group on the side chain of polyurethane (A2).

Two hydroxyl groups in dioxycarboxylic acid (a3) are both preferably to be primary, since activity is high in the urethane reaction. On the other hand, when the carboxyl group in dioxycarboxylic acid (a3) functions as a reaction component in the urethane reaction, gelling easily occurs during the reaction, and even when urethane resin (Ax) is obtained without gelling, it may easily coagulate partially. During the urethane reaction, therefore, the carboxyl group in dioxycarboxylic acid (a3) is preferably to be secondary or tertiary so that the dioxycarboxylic acid (a3) will exclusively function as a hydroxyl group component and the carboxyl group will not function as a reaction component in the urethane reaction. The dioxycarboxylic acid (a3) can have one secondary or tertiary carboxyl group in one molecule. The carboxyl group in dioxycarboxylic acid shows a catalytic action to promote the urethane reaction.

Thus, using a compound having two primary hydroxyl groups and one secondary or tertiary carboxyl group in one molecule from among the dioxycarboxylic acid (a3), polyurethane (A2) that does not easily permit partial coagulation, is rich in uniformity, and shows good flowability can be obtained. When the below-mentioned polyisocyanate curing agent (B) is mixed with such polyurethane (A2), an adhesive composition having a comparatively long pot life, which can form an adhesive layer with rich cohesion strength after curing, can be obtained.

Polyurethane (A2) preferably has an acid number of 20 - 80 mg KOH/g.

As the polyisocyanate curing agent (B), a compound of trifunctional or above from among the compounds exemplified as the aforementioned polyisocyanate (a1) can be mentioned. Particularly, at least one selected from trimethylolpropane adduct, biuret, and isocyanurate of a diisocyanate compound is preferable. Of those, more preferred are trimethylolpropane adduct, biuret, and isocyanurate of tolylene diisocyanate, isophorone diisocyanate or xylylene diisocyanate.

Polyurethane (A2) preferably contains 1 - 25 wt% of a structural part derived from dioxycarboxylic acid (a3). That is, the amount of the carboxyl group to be introduced into the side chain depends on the structure derived from dioxycarboxylic acid (a3). The carboxyl group introduced into the side chain is crosslinked with polyisocyanate curing agent (B) to form an adhesive layer, which contributes to the improvement of cohesion strength, adhesiveness, heat resistance and resistance to moist heat. However, when the amount of the carboxyl group introduced by dioxycarboxylic acid (a3) is too much, the pot life of the adhesive composition becomes short. In view of the balance between the pot life of the adhesive composition and the property of the adhesive layer, the structure derived from dioxycarboxylic acid (a3) is particularly preferably 5 - 20 wt% of polyurethane (A2).

Polyurethane adhesive (A) is more preferably a polyether polyurethane adhesive obtained using polyether polyol (a2-2) as polyol(a2) than a polyester polyurethane adhesive obtained using polyester polyol (a2-1) as polyol (a2), from the aspects of flame retardance, moisture-proof property, flexibility, adhesion and the like of the moisture-proof material.

When an adhesive composition obtained by adding polyisocyanate curing agent (B) to polyurethane (A2) obtained by reacting polyisocyanate (a1), polyol (a2), and dioxycarboxylic acid (a3) having two hydroxyl groups and one carboxyl group in one molecule is used as polyurethane adhesive (A), the curing conditions are preferably 80 - 140°C × 1 - 5 min.
In polyurethane adhesive (A), when an adhesive composition containing the curing agent (B) is used, the amount of the curing agent (B) to be added is not particularly limited. It is preferably about 1.0 - 3.0 parts by weight, more preferably 1.5 - 2.5 parts by weight, per 100 parts by weight of polyurethane (A1,A2).
Polyurethane generally expresses adhesiveness at an elastic modulus of about 10° Pa or below. The elastic modulus (room temperature) of polyurethane adhesive (A) is not more than about $10^6$ Pa, which is lower than that of polyurethane film substrate.
In the moisture-proof material of the present invention, the adhesive layer 3 is formed according to a general method for forming an adhesive layer of an adhesive tape or an adhesive sheet. When a flame retardant is contained in the adhesive layer 3, it may be added to an adhesive composition to be the starting material of the adhesive layer, or added to an intermediate product during the production step, whereby the flame retardant can be contained in the adhesive layer 3.
While the thickness of the adhesive layer 3 is not particularly limited, it is preferably 2 - 5 mil from the aspects of the moisture-proof property of the moisture-proof material, workability of re-adhesion of the moisture-proof material (prevention of adhesive residue). When it is not less than 2 mil, the moisture-proof property of the moisture-proof material is more improved, and when it is not more than 5 mil, workability of re-adhesion of the moisture-proof material (prevention of adhesive residue) becomes more advantageous.

[flame retardant]

In the present invention, a polyphosphate flame retardant and a phosphate triester flame retardant are used in combination.

[polyphosphate flame retardant]

As the polyphosphate flame retardant, known polyphosphates usable as a flame retardant can be used without a particular limitation. For example, a salt of polyphosphoric acid with a metal in the periodic table IA group - IVB group, ammonia, aliphatic amine, nitrogen-containing heterocyclic compound and the like is preferable. Representative salts include lithium salt, sodium salt, calcium salt, barium salt, iron(II) salt, iron(III) salt, aluminum salt and the like as metal salts, ammonium salt, methylamine salt, ethylamine salt, diethylamine salt, triethylamine salt, ethylenediamine salt, piperazine salt and the like as aliphatic amine salts, and pyridine salt, melamine salt and the like as nitrogen-containing heterocyclic compound salts.
Of these, a nitrogen-containing heterocyclic compound salt is preferable, and particularly preferred is a melamine salt. The "melamine" in the present invention is a concept including not only melamine but also melamine derivatives, compounds having a structure similar to melamine, melamine condensates and the like. Specific examples thereof include a compound having a triazine skeleton such as melamine, Ammelide, Ammeline, formoguanamine, guanylmemelamine, cyanomelamine, benzoguanamine, acetoguanamine, succinoguanamine, melame, meleme, methone, melon and the like, and sulfates thereof, melamine resins and the like. The melamine salt may be a double salt, and examples thereof include double salts of two or more kinds selected from melamine, melame and meleme.
Examples of the phosphoric acid which is a constituent unit of polyphosphoric acid include inorganic phosphoric acids such as orthophosphoric acid, phosphorous acid, hypophosphorous acid, metaphosphoric acid, pyrrophosphoric acid, triphosphoric acid, tetraphosphoric acid and the like; and organic phosphoric acids such as phosphonic acid, phosphinicocarboxylic acid and the like. Of these, orthophosphoric acid is preferable. Polyphosphoric acid may be a homopolyphosphoric acid consisting of phosphoric acid having a single kind of constituent unit, or a polyphosphoric acid copolymer consisting of phosphoric acid having two or more kinds of constitution units. Generally, it is homopolyphosphoric acid consisting of phosphoric acid having a single kind of constituent unit. In addition, polyphosphoric acid may be linear polyphosphoric acid or cyclic polymetaphosphoric acid, generally preferably linear polyphosphoric acid.
Specific preferable examples of the salt of polyphosphoric acid with a nitrogen-containing heterocyclic compound include ammonium polyphosphate, melamine polyphosphate, piperazine polyphosphate, melame polyphosphate, meleme polyphosphate, ammonium polyphosphate, melamine melame meleme polyphosphate complex salt and the like. Of these, melamine polyphosphate is preferable.
A polyphosphate flame retardant is thermally decomposed in the burning process of a moisture-proof material to form a comparatively thick phosphoric acid layer. This phosphoric acid layer shuts off oxygen, and suppresses a reaction of a substrate, an adhesive layer and oxygen, whereby the flame retardant property is considered to be achieved. Particularly, in a polyphosphoric acid-nitrogen-containing heterocyclic compound salt, since the nitrogen-containing

compound is decomposed in addition to the aforementioned effect of the phosphoric acid layer to suppress the reaction of a substrate, an adhesive layer and oxygen, carbonization of charred coating produced by the nitrogen element upon burning is further promoted, thus expressing higher flame retardant property.

One or more kinds of polyphosphate flame retardants can be used. The content is preferably 5 - 50 wt%, more preferably 5 - 30 wt%, relative to the whole moisture-proof material. When the content is not more than 50 wt%, sufficient adhesive force and transparency can be ensured. When it is not less than 5 wt%, a sufficient flame retardant effect can be obtained.

When a polyphosphate flame retardant is contained in the adhesive layer, the content of the polyphosphate flame retardant is preferably 5 - 40 wt%, more preferably 10 - 40 wt%, particularly preferably 10 - 30 wt%, relative to the whole adhesive layer. When the content is not more than 40 wt%, sufficient adhesive force can be obtained. When it is not less than 5 wt%, a sufficient flame retardant effect can be obtained.

[phosphate triester flame retardant]

As the phosphate triester flame retardant, a known phosphate triester compound usable as a flame retardant can be used without limitation. The phosphate ester compound is not particularly limited as long as it is an ester compound of phosphoric acid and an alcohol compound or a phenolic compound, and may be any of aliphatic phosphate ester, aromatic phosphate ester and aliphatic-aromatic phosphate ester. Examples of the aliphatic phosphate ester include trimethyl phosphate, triethyl phosphate, tripropyl phosphate, triisopropyl phosphate, tributyl phosphate, triisobutyl phosphate, pentaerythritol phosphate and the like. Examples of the aromatic phosphate ester include tri C6-20 aryl phosphate such as triphenyl phosphate, tricresyl phosphate, trixylyll phosphate, diphenyl cresyl phosphate, tri(isopropylphenyl) phosphate etc., and the like. Examples of the aliphatic-aromatic phosphate include methyl diphenyl phosphate, phenyl diethyl phosphate, diphenyl pentaerythritol diphosphate, dicresyl pentaerythritol diphosphate, dixylyl pentaerythritol diphosphate etc., and the like.

In addition, an aromatic condensed phosphate ester represented by the following formula (I) and the like can also be mentioned.

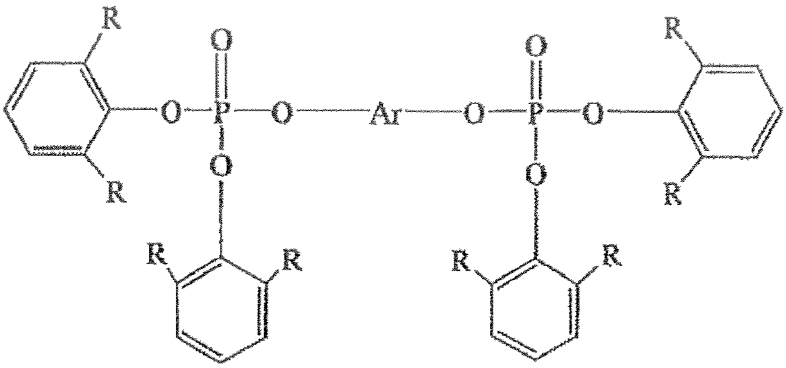

(I)

wherein 8 Rs are C1-C4 alkyl groups, which may be the same or different, and Ar is an aromatic ring.

Specific examples of the aromatic condensed phosphate ester include

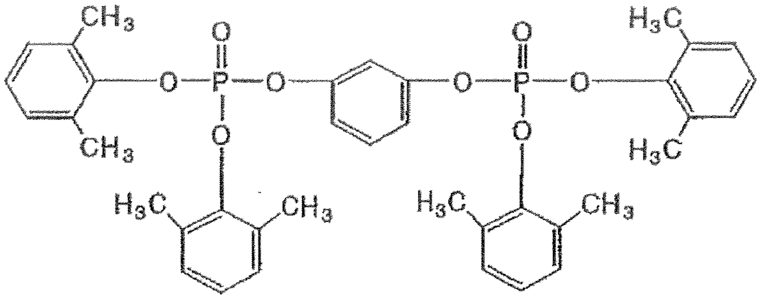

(II)

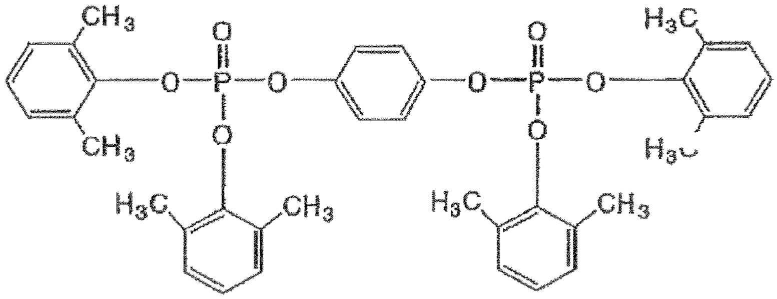

(III)

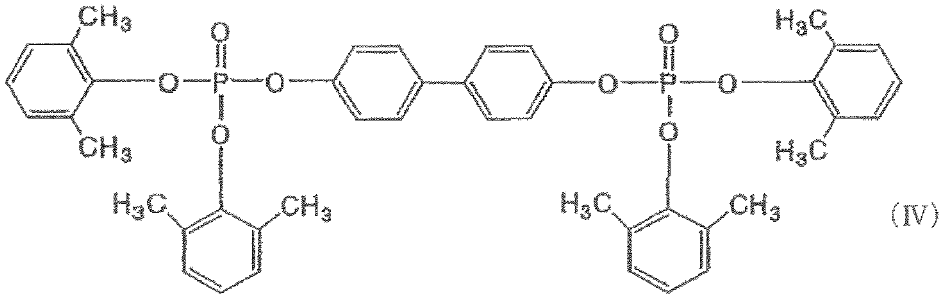

(IV)

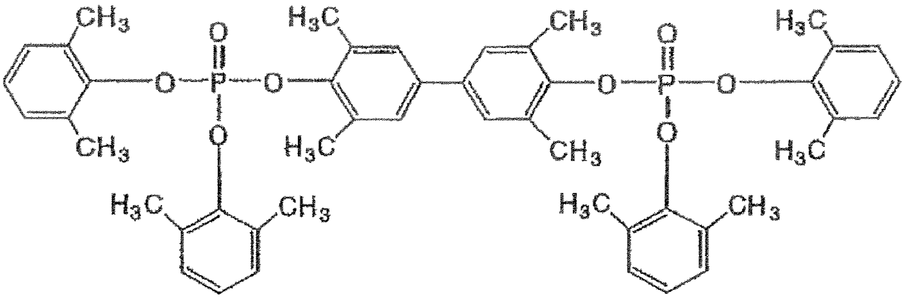

(V)

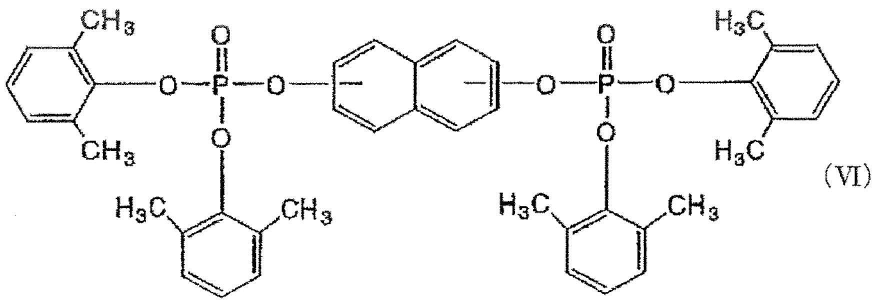

(VI)

and the like.

One or more kinds of phosphate triester flame retardants can be used. In addition, the phosphate triester flame retardant is preferably an aromatic phosphate ester or an aromatic condensed phosphate ester. Using an aromatic phosphate ester and an aromatic condensed phosphate ester, the effect of conferring flame resistance to initial burning is increased.

Using a phosphate triester flame retardant together with the aforementioned polyphosphate flame retardant, the flame resistance of the moisture-proof material is synergistically improved, as a result of which the total content of the flame retardant in the moisture-proof material can be reduced. Hence, for example, for a moisture-proof material to pass a burning test of a constructional material of a moisture-proof material for airplane floor panels, comparatively large amounts of a polyphosphate flame retardant, a phosphate triester flame retardant and other non-halogen flame retardants need to be contained in the moisture-proof material. Therefore, inconveniences such as decreased transparency, decreased adhesive property and the like occur. However, by adding a polyphosphate flame retardant and a phosphate triester flame retardant to the moisture-proof material, a moisture-proof material having sufficiently high flame resistance can be realized without causing such inconveniences.

The content of the phosphate triester flame retardant is preferably 5 - 30 wt%, more preferably 5 - 10 wt%, relative to the whole moisture-proof material. When the content exceeds 30 wt%, transparency tends to decrease. When it is less than 5 wt%, a flame retardant effect tends to be difficult to obtain.
In addition, when a phosphate triester flame retardant is to be contained in the adhesive layer, its content is preferably 5 - 20 wt%, more preferably 5 - 10 wt%, relative to the whole adhesive layer. When the content is not more than 20 wt%, transparency can be secured. When it is not less than 5 wt%, a sufficient flame retardant effect can be obtained.
The total content of the polyphosphate flame retardant and phosphate triester flame retardant in the moisture-proof material is preferably not more than 80 wt%, more preferably not more than 50 wt%, particularly preferably not more than 15 wt%, of the whole moisture-proof material.
The moisture-proof material of the present invention may contain a non-halogen flame retardant other than the polyphosphate flame retardant and phosphate triester flame retardant as long as the effect of the present invention is not impaired. Examples of such non-halogen flame retardant include known flame retardants free of halogen atom such as hydrated metal compound flame retardants, inorganic compound flame retardants, silicone flame retardants, nitrogen compound flame retardants, and organic metal compound flame retardants.
Examples of the hydrated metal compound flame retardant include aluminum hydroxide, magnesium hydroxide, calcium hydroxide and the like. Examples of the inorganic compound flame retardant include antimony compound, zinc borate, zinc stannate, molybdenum compound, zinc oxide, zinc sulfide, zeolite, titanium oxide, nanofiller (montmorillonite (MMT), nano hydrated metal compound, silica), carbon nanotube, calcium carbonate and the like.
Examples of the silicone flame retardant include dimethyl silicone, amino-modified silicone, epoxy-modified silicone and the like.
Examples of the nitrogen compound flame retardant include a hindered amine compound, melamine cyanurate, a triazine compound, a guanidine compound and the like.
Examples of the organic metal compound flame retardant include copper ethylenediaminetetraacetate, calcium perfluorobutanesulfonate and the like.

[release liner]

In the moisture-proof material of the present invention, a release liner may be laminated on adhesive layer 3 until use, to protect the surface of the adhesive layer 3, suppress a decrease in the adhesive force of the adhesive layer and the like. Such release liner is detached when the moisture-proof material is adhered to the surface of an adherend such as a floor panel and the like.
Examples of the above-mentioned release liner include a release liner wherein a release-treated layer is formed on at least one surface of a substrate (substrate for release liner), a release liner consisting of a low adhesive substrate made of a fluorinated polymer (e.g., polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer and the like) or a nonpolar polymer (e.g., olefin resin such as polyethylene, polypropylene and the like, and the like), and the like.
Examples of the above-mentioned substrate (substrate for release liner) include plastic films (synthetic resin films) such as a polyester film (poly(ethylene terephthalate) film and the like), an olefin resin film (polyethylene film, polypropylene film and the like), a polyvinyl chloride film, a polyimide film, a polyamide film (nylon film), a rayon film and the like, paper (quality paper, Japanese paper, craft paper, glassine, synthetic paper, topcoat paper and the like), multi-layered products (2 - 3 layer composites) thereof by lamination, coextrusion and the like, and the like. While the release agent to be used for the release-treated layer is not particularly limited, for example, silicone release agents, fluorinated release agents, long chain alkyl release agents and the like can be used. The release agent may be used alone or two or more kinds thereof can be used in combination.
The moisture-proof material of the present invention shows superior flame resistance. The moisture-proof material of the present invention shows a burning time of preferably within 15 sec, more preferably within 10 sec, in a burning test using a laminate of a floor panel as a test sample. The extent of burning is preferably not more than 8 inch, more preferably not more than 4 inch. The laminate of a moisture-proof material adhered to a floor panel assumes an actual constructional material.

[burning test]

As shown in Fig. 5, a test sample S with a flat surface size of 3 inch × 12 inch and comprised of a moisture-proof material 1 and a floor panel 10 adhered to each other is set such that the axis in the length direction thereof is parallel to the vertical direction, a yellow chip-free blue flame 21 (length 38 mm) of a methane gas is burnt in the vertical direction in contact with the sample S for 12 seconds from a bunsen or Tirrill burner 20 having a diameter (inner diameter) of 3/8 inch (10 mm), which is set beneath the test sample S in the vertical direction, such that the center of the lower

end 1A of the aforementioned test sample S is at the height of 1/2 (19 mm) of the length of the flame, and the time of burning and extent of burning after removing the flame are measured.

The test sample is produced by cutting a floor panel (honeycomb structural member) and a moisture-proof material each into a flat surface size of 3 inch×12 inch, adhering them to each other, pressurizing them by one reciprocation of a 2 kgf roller, and leaving them at room temperature for 20 min or longer.

In addition, the test is performed in a stainless steel test cabinet (temperature 23°C, humidity 50% RH, air atmosphere).

The moisture-proof material of the present invention is used by directly adhering to a target desired to be moisture-proof such as a floor panel and the like. The adhesive force thereof is preferably not less than 5.01 bs/inch at room temperature (humidity 50%RH), preferably not less than 7.51 bs/inch at 160F (humidity 50%RH), and preferably not less than 5.01 bs/inch at 120F (humidity 95%RH). Such adhesive force can be measured by a measurement method according to ASTM-D100.

The moisture-proof material of the present invention does not permit easy permeation of water and does not absorb water easily. The moisture transmissivity is preferably not more than 9.0%, more preferably not more than 4.1%. The moisture absorption rate is preferably not more than 1.0%, more preferably not more than 0.5%.

The moisture transmissivity can be measured by a measurement method according to ASTM D-3833, and the moisture absorption rate can be measured by a measurement method according to BSM 8-346. The measurement methods of both the moisture transmissivity and moisture absorption rate are explained in detailed in the following.

While a moisture-proof material to be used for transportation such as airplanes, boats and ships and the like is required to show particularly high moisture-proof property, the moisture-proof material of the present invention can sufficiently meet such requirement.

The moisture-proof material of the present invention preferably has a tensile strength of not less than 7500psi and a rupture elongation of not less than 550%. With such mechanical properties, it shows superior linearity on adhesion. The linearity on adhesion can be evaluated by the following method.

(test of linearity on adhesion)

As shown in Fig. 4, tape T (width 1 inch, length 40 cm) is prepared, one terminus portion (length 1 inch part) of the tape T is adhered to an adherend 50, 30 cm in length of the tape T is adhered to the adherend 50 while pulling the other terminus portion in the tape axis direction with 2 kg force, and a width (W) of the minimum width part of the tape T adhered to the adherend 50 is measured. A smaller decrease of the width (W) of the minimum width part relative to the width (1 inch) of the tape before the test means more superior linearity on adhesion.

The tensile strength of the moisture-proof material of the present invention is more preferably not less than 8100 psi, further preferably not less than 8500 psi. The rupture elongation is more preferably not less than 650%, further preferably not less than 775%. The tensile strength of the moisture-proof material is preferably not more than 15000 psi for the flexibility of the moisture-proof material, and the rupture elongation of the moisture-proof material is preferably not more than 1500% for the workability of the adhesion work of the moisture-proof material.

The tensile strength and rupture elongation of the moisture-proof material can be measured by a measurement method according to ASTM D3759.

Polyester polyurethane generally has a higher strength than polyether polyurethane, and a polyester polyurethane film substrate has a comparatively thin thickness and a high tensile strength. Therefore, using a polyester polyurethane film substrate as the polyurethane film substrate, a moisture-proof material having a light weight and superior in the linearity on adhesion can be obtained. In addition, a film made of polyester polyurethane is superior to a film made of polyether polyurethane in the adhesiveness to an adhesive (particularly polyurethane adhesive). Using a polyester polyurethane film substrate as the polyurethane film substrate, therefor, adhesive residue by detaching the moisture-proof material from an adhered surface such as a floor panel and the like for maintenance and the like after adhering the moisture-proof material to the adhered surface does not occur easily.

While the moisture-proof material of the present invention has a comparatively thin thickness, it shows desired good linearity on adhesion. Therefore, the weight thereof can be easily made small, has a weight of preferably not more than 1.2 oz/sqft, more preferably not more than 1.0 oz/sqft. When the weight is not more than 1.2 oz/sqft, it can be particularly preferably used as a moisture-proof material for transportation vehicles such as airplanes, boats, ships and the like.

Generally, a carpet to cover a floor surface is, as shown in Figs. 2 and 3, adhered to a moisture-proof material, or adhered to a moisture-proof material and a floor panel via a double-faced adhesive tape. Such double-faced adhesive tape generally has a substrate thickness of about 100 μm, and a total tape thickness of about 300 μm. Generally, a substrate made of a cotton material containing a flame retardant having an adhesive layer made of a rubber adhesive containing a flame retardant formed thereon is used for hand-tearability. The moisture-proof material of the present invention is also fine in adhesiveness to a double-faced adhesive tape. Examples

The present invention is explained more specifically in the following by referring to Examples and Comparative Examples.
The evaluation test of the moisture-proof material in the Examples and Comparative Examples was performed by the following method.

1. Thickness and weight

Weight: A rectangle sample having a flat surface size of 2×3 inch was left standing at 75±5F for 24±2 hr, the weight of the sample was measured by a scale having the minimum scale value of 0.001 g, and the average of 5 samples was adopted.
Thickness: The thickness was measured by a dial thickness gauge having the minimum scale value of 0.0005 inch and applying 7.0 - 9.0 psi.

2. Adhesive force and anchor property

According to ASTM-D1000, 180° peel strength was measured, and the 180° peel strength was taken as the adhesive force. Honeycomb adherend (BMS4-17) was used as the adherend. A preferable range of the adhesive force is 1.3 - 2.5 lbs/inch.

3. Transparency

A moisture-proof material was laid on the periodic table, and the visibility was evaluated in 5 levels based on the visual observation of the atom symbols and atomic weights in the periodic table through the moisture-proof material. The periodic table was downloaded (black and white) from Los Alamos National Laboratory chemistry division (http://periodic.lanl.gov/downloads.shtml), printed in the letter size and used.
level 5: The atom symbols and atomic weights can be clearly read.
level 4: The atom symbols can be read without difficulty, but the atomic weights can be marginally read.
level 3: The atom symbols can be marginally read, but the atomic weights are unreadable.
level 2: The atom symbols are marginally visible, but the rest is unreadable.
level 1: All information on the periodic table is mostly unreadable.

4. Tensile strength and rupture elongation

Measured according to ASTM D3759.
To be specific, the tensile strength and rupture elongation were measured under the conditions of 12.5 mm sample width, 50 mm chuck distance and 50 mm/min tensile speed.

5. Burning test

Gillfloor 4417A Panel (manufactured by M.C. Gill Corporation, trade name), which is a floor panel for light weight airplanes produced by bonding an epoxy facing reinforced with one directional glass fiber to an aramid honeycomb core, is cut into a 3 inch ×12 inch size. A sample cut into a 3 inch ×12 inch size (moisture-proof material) is adhered thereto, and the laminate is pressed by one reciprocation of a 2 kgf roller, and left standing at room temperature for 24 hr to give a test sample.
In a stainless steel test cabinet (temperature: 23°C, humidity: 50%RH, air atmosphere), the test sample is burnt under the aforementioned conditions, and the burning time is measured.
When the burning time is within 15 sec, the sample passes (O).

6. Moisture transmissivity

Measured according to ASTM D-3833.
To be precise, $CaCl_2$ is fed into a container specified by ASTM (outer size of flange 50.8 mm×12.4 mm, inner size thereof 25.4 mm×101.6 mm, container body size 25.4 mm×101.6 mm×38.1 mm (depth)) to about 3 mm short of the full depth. A sample cut in the same size as the outer size of the flange is adhered to the flange while avoiding wrinkles and foams. The sample is left standing in an oven at 38°C×95% for 24 hr, taken out, left standing at room temperature for 15 min, and the weight is measured ($W^1$). The sample is again left standing in an oven at 38°C×95% for 72 hr, taken out, and left standing at room temperature for 15 min, and the weight is measured again (W2). Then, WVTR (moisture transmissivity) is calculated by the following formula [I].

$$\text{formula [I]: WVTR (moisture transmissivity)} = (W2-W1) \times 2400/(T \times A)$$

wherein T is exposure time (72 hr), and A is an opening area (4 $inch^2$) of the container.

7. Moisture absorption rate

Measured according to BSM 8-346.
To be precise, a 1×4 inch sample is adhered to a 1.5×4 inch 2024 aluminum panel, preserved for 24 hr at 75F, 50% humidity, and the initial weight is measured. Then, the laminate is preserved at 120F×95% humidity for 7 days, taken out, and redundant water etc. are wiped with gauze. The weight is measured within 30 min after taking out, compared with the initial and the moisture absorption rate is measured.

8. Linearity on adhesion

The test and evaluation were performed by the aforementioned method (Fig. 4).
A glass plate was used as adherend 50, a spring balance 51 was set at the center of the end portion (length 1 inch) of the tape, and the tape was pulled with 2 kg force. The test was performed at room temperature. A minimum width (W) greater than 23 mm was marked with good (O), and that not more than 23 mm, was marked with bad (×).

[Examples and Comparative Examples]

Polyester polyurethane adhesive

Polyester polyurethane (SH101 manufactured by TOYO INK CO., LTD.) (100 parts by weight) is mixed with an isocyanate curing agent (T-510B manufactured by TOYO INK CO., LTD.) at 2 parts by weight to prepare an adhesive. The curing conditions of the adhesive were set to 120°C×2 min.

Substrate

As the substrate, for example, three kinds of VLM-4001 with thickness 4 mil, VLM3301 with thickness 7 mil, and VLM3301 with thickness 10 mil, which are polyester polyurethane film substrates manufactured by American Polyfilm, Inc., were prepared.

Flame-retardant

(1) polyphosphate flame retardant

manufactured by Chemische Fabrik Budenheim, Budit3141 (polyphosphoric acid melamine salt with orthophosphoric acid as constituent unit)

(2) phosphate triester flame retardant

tricresylphosphate (TCP)

Examples 1 - 7

An adhesive layer having a thickness of 4 mil was formed on one surface of a substrate having a thickness of 15 mil to give a moisture-proof material. Two kinds of flame retardants were added to the adhesive layer and the content of each flame retardant was changed.

Comparative Examples 1 - 6

An adhesive layer having a thickness of 4 mil was formed on one surface of a substrate having a thickness of

15 mil to give a moisture-proof material. Comparative Example 1 was free of a flame retardant, and Comparative Examples 2 - 6 contained 1 kind of flame retardant in the adhesive layer.

The obtained moisture-proof material was subjected to the aforementioned test. The results are shown in the following Tables 1, 2.

In Tables 1, 2, the contents of TCP Budit3141 are based on the content of the whole adhesive layer, and the content based on the whole moisture-proof material is shown in the parentheses.

Table 1

| | Example | | | | | | |
|---|---|---|---|---|---|---|---|
| | 1 | 2 | 3 | 4 | 5 | 6 | 7 |
| TCP content | 5 wt% (1.9%) | 5 wt% (1.8%) | 5 wt% (1.8%) | 5 wt% (1.7%) | 10 wt% (3.5%) | 10 wt% (3.4%) | 20 wt% (6.7%) |
| Budit3141 content | 10 wt% (3.8%) | 20 wt% (7.3%) | 30 wt% (10.6%) | 40 wt% (13.7%) | 30 wt% (10.4%) | 40 wt% (13.4%) | 30 wt% (10.1%) |
| flame resistance | ○ (2 sec) | ○ (2 sec) | ○ (1 sec) | ○ (1 sec) | ○ (1 sec) | ○ (1 sec) | ○ (1 sec) |
| transparency | level 3 | level 2 | level 2 | level 1 | level 2 | level 1 | level 2 |
| moisture transmissivity (%) | 2.1 | 2.4 | 2.5 | 2.8 | 2.3 | 2.8 | 3 |
| moisture absorption rate (%) | 0.11 | 0.13 | 0.15 | 0.16 | 0.138 | 0.145 | 0.14 |
| adhesive force (lbs/inch) | 3 | 2.4 | 2.5 | 0.98 | 2.1 | 1.13 | 1.23 |
| rupture elongation (%) | 925 | 893 | 880 | 875 | 882 | 865 | 842 |
| tensile strength (spi) | 10529 | 10234 | 10353 | 10245 | 10523 | 10252 | 10432 |
| linearity on adhesion | ○ | ○ | ○ | ○ | ○ | ○ | ○ |

Table 2

| | Comparative Example | | | | | |
|---|---|---|---|---|---|---|
| | 1 | 2 | 3 | 4 | 5 | 6 |
| TCP (wt%) | - | 20 wt% (7.5%) | 30 wt% (10.8%) | - | - | - |
| Budit3141 (wt%) | - | - | - | 30 wt% (10.8%) | 40 wt% (13.9%) | 50 wt% (16.8%) |
| flame resistance | × (200 sec) | × (120 sec) | ○ (5 sec) | × (200 sec) | × (137 sec) | × (200 sec) |
| transparency | level 1 | level 5 | level 5 | level 2 | level 1 | level 2 |
| moisture transmissivi ty (%) | 2.0 | 2.4 | 2.5 | 2.2 | 2.4 | 2.8 |
| moisture absorption rate (%) | 0.05 | 0.12 | 0.15 | 0.13 | 0.133 | 0.14 |
| adhesive force (lbs/inch) | 3.8 | 3.0 | 2.8 | 1.4 | 1.2 | 0.4 |
| rupture elongation (%) | 920 | 863 | 888 | 835 | 869 | 923 |

(continued)

| | Comparative Example | | | | | |
|---|---|---|---|---|---|---|
| | 1 | 2 | 3 | 4 | 5 | 6 |
| tensile strength (spi) | 10259 | 10321 | 10423 | 10224 | 10308 | 10256 |
| linearity on adhesion | ○ | ○ | ○ | ○ | ○ | ○ |

This application is based on US provisional application No. 61/651,670, the contents of which are incorporated in full herein.

## Claims

1. A moisture-proof material comprising a substrate and an adhesive layer formed on at least one surface of the substrate, wherein at least one of the substrate and the adhesive layer comprises a polyphosphate flame retardant and a phosphate triester flame retardant, simultaneously or alternatively.

2. The moisture-proof material according to claim 1, wherein the polyphosphate flame retardant is a salt of polyphosphoric acid and a nitrogen-containing heterocyclic compound.

3. The moisture-proof material according to claim 1, wherein the polyphosphate flame retardant is a salt of polyphosphoric acid and melamine.

4. The moisture-proof material according to claim 1, wherein the phosphate triester flame retardant is aromatic phosphate triester.

5. The moisture-proof material according to claim 1), wherein the content of the polyphosphate flame retardant is 5 - 50 wt% of the whole moisture-proof material and the content of the phosphate triester flame retardant is 5 - 30 wt% of the whole moisture-proof material.

6. The moisture-proof material according to claim 1, wherein the polyphosphate flame retardant and phosphate triester flame retardant are contained in at least an adhesive layer.

7. The moisture-proof material according to claim 6, wherein the content of the polyphosphate flame retardant in the adhesive layer is 5 - 40 wt% of the whole adhesive layer and the content of the phosphate triester flame retardant in the adhesive layer is 5 - 20 wt% of the whole adhesive layer.

8. The moisture-proof material according to claim 7, comprising a substrate which does not contain a polyphosphate flame retardant and a phosphate triester flame retardant.

9. The moisture-proof material according to claim 1, which shows a burning time of not more than 15 seconds and an extent of burning of not more than 8 inches in the following burning test:

   [burning test]
   A test sample with a flat surface size of 3 inch × 12 inch and comprised of a moisture-proof material and a floor panel adhered to each other is set such that the axis in the length direction thereof is parallel to the vertical direction, a yellow chip-free blue flame (length 38 mm) of a methane gas is burnt in the vertical direction in contact with the sample for 12 seconds from a bunsen or Tirrill burner having a diameter (inner diameter) of 10 mm, which is set beneath the test sample in the vertical direction, such that the center of the lower end of the test sample is at the height of 1/2 (19 mm) of the length of the flame, and the time of burning after removing the flame is measured.

10. The moisture-proof material according to claim 1, wherein the moisture transmissivity is not more than 9.0%.

**11.** The moisture-proof material according to claim 1, which has a moisture absorption rate of not more than 1.0%.

**12.** The moisture-proof material according to claim 1, wherein the tensile strength is not more than 15000 psi.

**13.** The moisture-proof material according to claim 1, wherein the rupture elongation is not more than 1500%.

FIG. 1

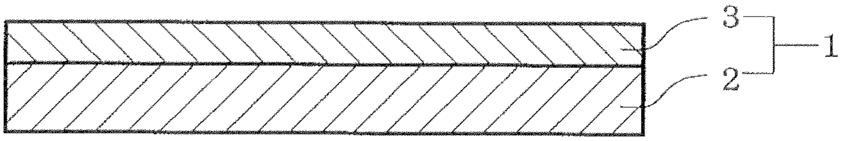


FIG. 2

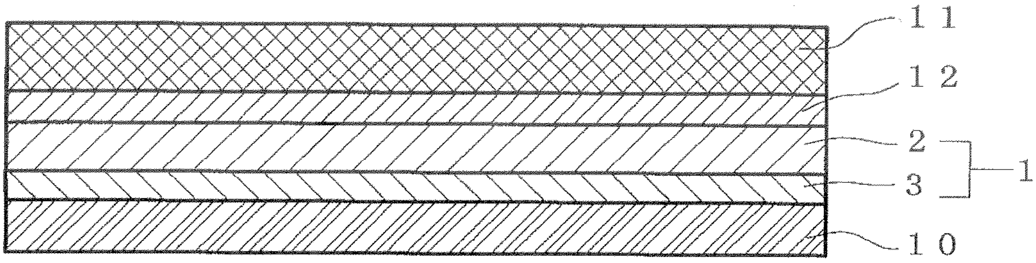


FIG. 3

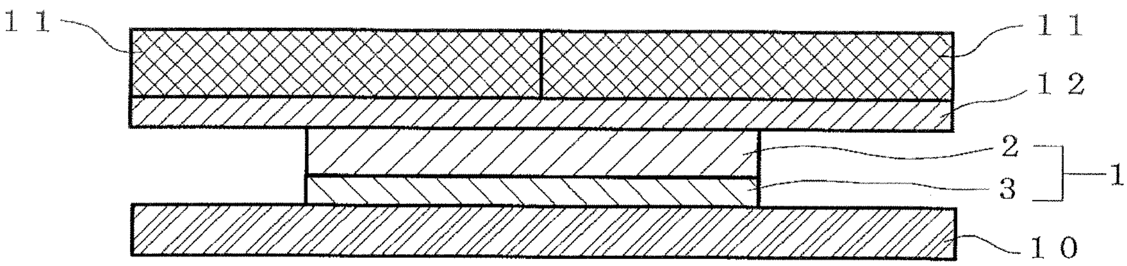

FIG. 4

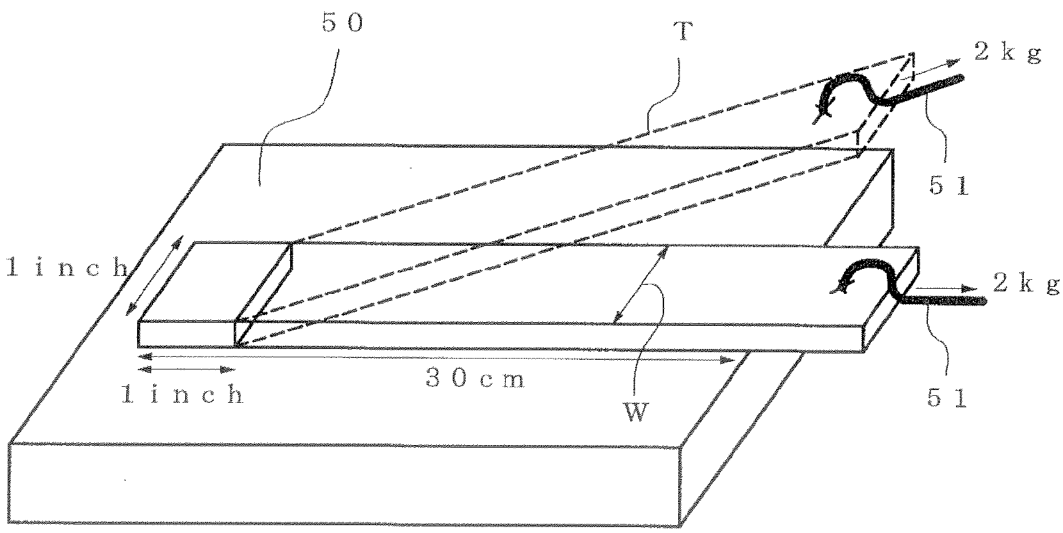

FIG. 5

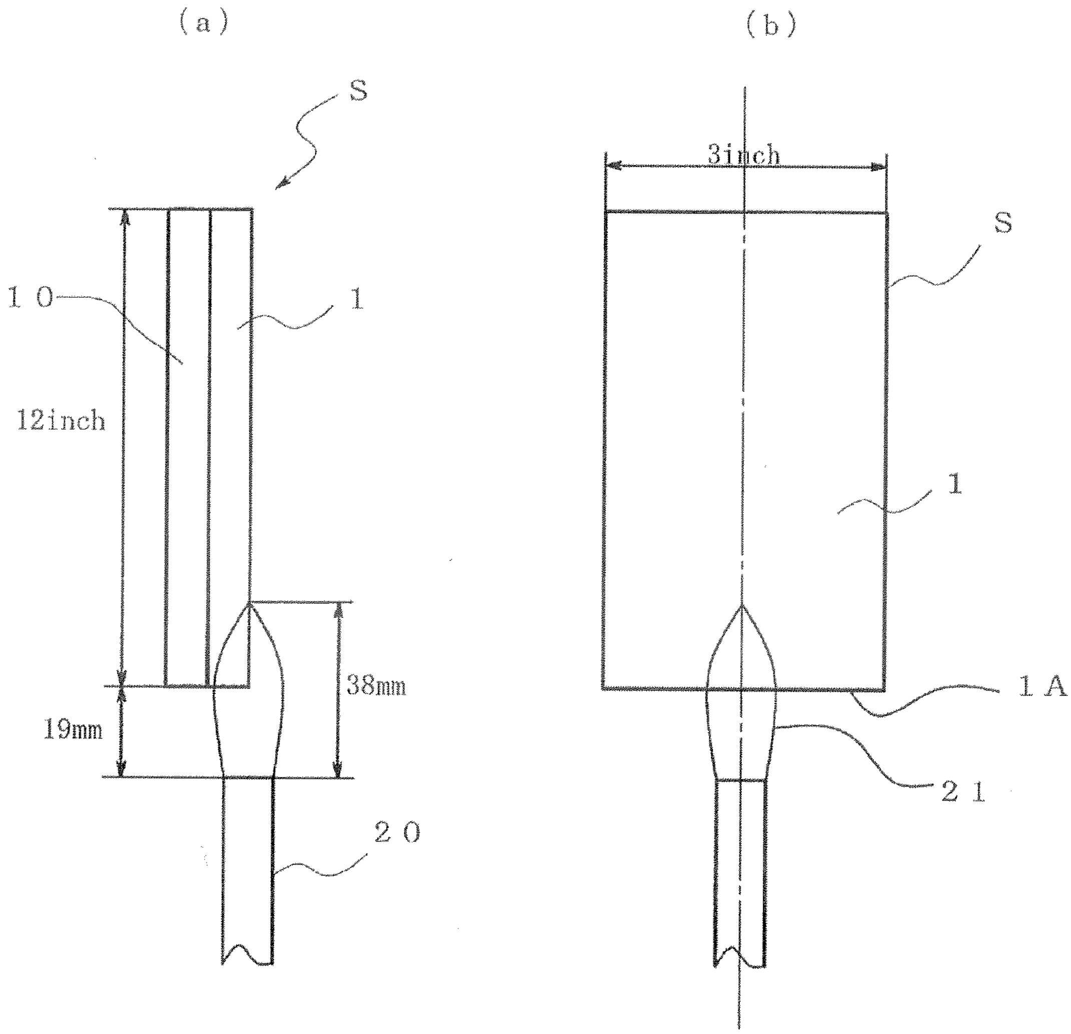

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040070156 A
- US 61651670 B